# EUROPÄISCHE PATENTSCHRIFT

(11) **EP 0 898 155 B1**
(45) Veröffentlichungstag und Bekanntmachung des Hinweises auf die Patenterteilung: **06.10.2004**
(21) Anmeldenummer: 98115046.9
(22) Anmeldetag: 11.08.1998
(51) Int. Cl.: G01G 19/32

(54) **Zufuhrvorrichtung für ein rieselfähiges Aufgabegut in eine Dosiervorrichtung**
Feed assembly for discharging a flowable material in a dosing device
Assemblage d'alimentation pour décharger un matériau coulant dans un dispositif de dosage

(30) Priorität: 16.08.1997 DE 29714642 U
(43) Veröffentlichungstag der Anmeldung: 24.02.1999
(73) Patentinhaber: Mann + Hummel ProTec GmbH, 71636 Ludwigsburg (DE)
(72) Erfinder: Vollmar, Hartmut, 53773 Heneff-Rott (DE)
(74) Vertreter: Voth, Gerhard, Dipl.-Ing.

(56) Entgegenhaltungen:
- DE-A- 2 264 466
- DE-U- 9 214 622
- DE-U- 29 714 642
- US-A- 5 148 943

## Beschreibung

Die Erfindung betrifft eine Zufuhrvorrichtung für ein oder mehrere Komponenten eines rieselfähigen Aufgabegutes zu einer Dosiervorrichtung, wobei die Dosiervorrichtung eine der Anzahl der Komponenten entsprechende Anzahl von Trichterwaagen für jede der Komponenten aufweist, die oberhalb der Dosiervorrichtung angeordnet ist und jeder Trichterwaage zugeordnet je einen mit einem Absperrelement zum Öffnen und Verschließen ausgerüsteten Zuführstutzen für die Komponente umfaßt.

Derartige Vorrichtungen werden beispielsweise an Kunststoffverarbeitungsmaschinen, wie Spritzguß- oder Extrusionsanlagen, für die genau dosierbare Zuführung von Rohmaterial eingesetzt. Die bekannten Zufuhrvorrichtungen weisen eine mittels Stützstreben oberhalb der Trichterwaagen angeordnete Tragplatte auf, in der alle Zuführstutzen und Absperrelemente für die Zuführung eines aus einzelnen Komponenten bestehenden Aufgabegutes gehalten sind. Nachteilig bei den bekannten Zufuhrvorrichtungen ist, daß, da die Anzahl, Anordnung und Größe der Trichterwaagen von Dosiervorrichtungen unterschiedlich sind und sich dem Aufgabegut anpassen, für die verschiedenen Dosiervorrichtungen jeweils eine individuell angepaßte Tragplatte mit entsprechenden Bohrungen für die Zuführstutzen und Absperrelemente vorgesehen sein muß. Dies erhöht zum einen den Fertigungsaufwand der bekannten Vorrichtungen, zum anderen ist eine nachträgliche Veränderung des zu Posierenden Aufgabegutes und damit der Dosiervorrichtung oft nur mit zusätzlichem Aufwand möglich, was die Flexibilität derartiger Vorrichtungen unerwünscht einschränkt.

Druckschrift US-A-5,149,943 offenbart eine Zufuhrvorrichtung für eine oder mehrere Komponenten eines rieselfähigen Aufgabegutes zu einer Dosiervorrichtung, wobei in eine feste, vorgegebene Trägerstruktur verschiedenen Module mit jeweils eigenen Trichterwaagen, Absperrelementen, Zufuhrstutzen und den entsprechend hierzu benötigten Motoren und Steuerungen angeordnet sind, wobei die Module in diese einzige Trägerstruktur eingepasst sind. Durch diese einzige Trägerstruktur ist die maximale Anzahl der einzusetzenden Module festgelegt.

Aufgabe der Erfindung ist daher, eine Vorrichtung zum Zuführen eines mindestens eine Komponente enthaltenden rieselfähigen Aufgabegutes für Dosiervorrichtungen vorzuschlagen, die aus wenigen Einzelteilen individuell zu der gewünschten Zufuhrvorrichtung in Abhängigkeit von der jeweiligen Dosiervorrichtung zusammenbaubar ist und sich darüber hinaus nachträglich einfach an geänderte Dosiervorrichtungen anpassen läßt.

Diese Aufgabe wird erfindungsgemäß mit einer Vorrichtung gemäß den kennzeichnenden Merkmalen des Schutzanspruches 1 gelöst.

Vorteilhafte Ausgestaltungen der Erfindung sind den Unteransprüchen entnehmbar.

Zur Lösung der gestellten Aufgabe schlägt die Erfindung vor, daß modulartig zusammensetzbare, eine Tragstruktur und einen Zuführstutzen und ein Absperrelement umfassende Modulelemente vorgesehen sind. Gemäß der Erfindung wird die Zufuhrvorrichtung baukastenartig aus Modulelementen zusammengesetzt. Somit ist es möglich, unter Einsatz gleichartig aufgebauter Modulelemente Zufuhrvorrichtungen mit unterschiedlicher Anzahl und Anordnung von Zufuhrstutzen für unterschiedliche Anzahl von Komponenten zu erstellen. Auf diese Weise können je nach Anzahl, Anordnung und Größe der Trichterwaagen in der Dosiervorrichtung ein oder mehrere Modulelemente, die jeweils einen Zuführstutzen und ein Absperrelement aufweisen, zu der gewünschten Zufuhrvorrichtung für das Aufgabegut in die Trichterwaagen der Dosiervorrichtung zusammengesetzt werden. Die Fertigung der erfindungsgemäßen Vorrichtung wird dadurch erheblich vereinfacht und nach Auswahl der benötigten Modulelemente die gewünschte Vorrichtung zusammengefügt werden kann. Darüber hinaus wird die erforderliche Teilezahl für die Herstellung der erfindungsgemäßen Vorrichtung erheblich verringert und die Montagezeit verkürzt, was zu insgesamt niedrigeren Herstellungskosten führt. Ein weiterer wesentlicher Vorteil der Erfindung ist es, daß bei einer Änderung der Dosiervorrichtung durch entsprechendes Hinzufügen oder Entfemen von Modulelementen der erfindungsgemäßen Vorrichtung eine Anpassung an die geänderte Dosiervorrichtung auf einfache Weise und innerhalb kurzer Zeit vorgenommen werden kann.

Eine bevorzugte Ausführungsform der Erfindung sieht vor, daß als Modulelemente ein zentrales Element und periphere. Elemente vorgesehen sind, wobei die peripheren Elemente am Außenumfang des zentralen Elementes anbaubar sind. Auf diese Weise läßt sich eine besonders kompakte und einfach zu der gewünschten Anordnung zusammenbaubare erfindungsgemäße Vorrichtung erzielen, bei der periphere Elemente in gewünschter Zahl an das zentrale Element angebaut werden. Das zentrale Element kann zugleich generell allein als Zuführstutzen für Aufgabegüter eingesetzt werden, die nur eine Komponente umfassen.

Gemäß einer vorteilhaften Ausführungsform kann die Tragstruktur der Modulelemente im wesentlichen flächig ausgebildet sein und der Zuführstutzen wird senkrecht durch die Fläche geführt.

Hierbei ist bevorzugt, daß die Tragstruktur des zentralen Elementes mehreckig, mindestens dreieckig mit geradlinig verlaufenden Seiten ausgebildet ist, wobei an jeder Seite ein peripheres Element befestigbar ist. Dabei können die Seiten des zentralen Elementes sowohl gleich lang wie auch unterschiedlich lang ausgebildet sein. Im Interesse einer möglichst geringen Teilezahl und Austauschbarkeit der peripheren Elemente untereinander ist jedoch bevorzugt, die Seiten des zentralen Elementes gleich lang auszubilden.

Je nach Anordnung und Größe der Trichterwaagen der Dosiervorrichtung können dabei die Modulelemente mit gleich oder unterschiedlich großen Zuführstutzen ausgerüstet sein, um den für die Befüllung der Trichterwaage erforderlichen Querschnitt des Zuführstutzens zur Verfügung zu stellen. Beispielsweise ist es möglich, den Zuführstutzen für eine die Hauptkomponente aufnehmende Trichterwaage im zentralen Element und die Zuführstutzen für Nebenkomponenten in den peripheren Elementen der erfindungsgemäßen Vorrichtung anzuordnen.

Eine vorteilhafte Ausführungsform der Erfindung schlägt vor, daß die Tragstruktur der Modulelemente einen plattenförmigen Bodenbereich mit den Bodenbereich umlaufend umgebenden Seitenwänden nach Art eines Kastens aufweist, wobei die Befestigungen der Modulelemente untereinander im Bereich der Seitenwände vorgesehen sind. Hierbei kann vorgesehen sein, daß jedes periphere Element nur am zentralen Element befestigt ist, wie es auch möglich ist, Befestigungen der peripheren Elemente untereinander vorzusehen.

Vorteilhaft sind innerhalb der kastenförmigen Tragstruktur der Modulelemente Betätigungsorgane, wie Pneumatikzylinder, Magnetventile oder ähnliches, für das Absperrelemente angeordnet.

Eine besonders einfach zu montierende und auch nachträglich an veränderte Dosiervorrichtungen anpaßbare erfindungsgemäße Vorrichtung wird dadurch erreicht, daß das zentrale Element mit vorzugsweise sämtlichen Zuführleitungen für die Betätigungsorgane der Absperrelemente ausgerüstet ist und die Betätigungsorgane der peripheren Elemente an die Zuführleitungen des zentralen Elementes anschließbar sind.

Als Absperrelement kann beispielsweise ein Absperrschieber mit einer den Zuführstutzen des jeweiligen zentralen oder peripheren Elementes öffnenden oder verschließenden bewegbaren Schiebeplatte vorgesehen sein. Es ist jedoch im Rahmen der Erfindung jedoch auch möglich, andere Absperrelemente, wie vakuumbeaufschlagte Quetschventile oder ähnliches, vorzusehen.

Zur Befestigung der erfindungsgemäßen Vorrichtung oberhalb der Trichterwaagen der Dosiervorrichtung wird vorgeschlagen, daß auf der der Dosiervorrichtung zugewandten Seite des Bodens der Tragstruktur der Modulelemente verstärkte Bereiche für die Befestigung von Stützstreben ausgebildet sind. Auf diese verstärkten Bereiche können sodann die Stützstreben aufgesetzt und beispielsweise verschraubt werden. Auf diese Weise ist es beispielsweise auch möglich, aus einem zentralen oder auch peripheren Element eine erfindungsgemäße Vorrichtung zum Zuführen eines lediglich aus einer Komponente bestehenden Aufgabegutes in eine Dosiervorrichtung mit nur einer Trichterwaage herzustellen, was die Flexibilität der erfindungsgemäßen Vorrichtung erhöht und eine weitere Verringerung der notwendigen Teile für die Herstellung der Vorrichtung ermöglicht.

Eine weitere Ausführungsform der Erfindung sieht vor, daß die Seitenwände des zentralen Elementes höher als die der peripheren Elemente ausgebildet sind und im Bereich des Überstandes der Seitenwände des zentralen Elementes Befestigungswinkel für die Befestigung von Stützstreben anbringbar sind. Auch auf diese Weise kann die erfindungsgemäße Vorrichtung oberhalb der Trichterwaagen der Dosiervorrichtung mittels Stützstreben befestigt werden, die über die Befestigungswinkel mit dem zentralen Element verbunden sind und wobei beispielsweise die peripheren Elemente entlang des Außenumfangs des zentralen Elementes befestigt sind.

Eine bevorzugte Ausführungsform der Erfindung ist dadurch gekennzeichnet, daß die Tragstruktur des zentralen Elementes als regelmäßiges Achteck ausgebildet ist und die Tragstruktur der peripheren Elemente im wesentlichen als gleichschenkliges Trapez ausgebildet ist, so daß die Tragstrukturen der peripheren und des zentralen Elementes zu einer durchgehenden ebenen Fläche zusammenbaubar sind. Auf diese Weise wird zum einen eine modulartig aufgebaute erfindungsgemäße Vorrichtung geschaffen, die bei Befestigung je eines peripheren Elementes an einer der Seiten des zentralen Elementes insgesamt neun Zuführstutzen für neun Trichterwaagen der Dosiervorrichtung aufweist und damit die gängigen Ausführungsformen von. Dosiervorrichtungen mit einem bis neun Trichterwaagen abdeckt, zum anderen wird durch die Ausbildung einer durchgehenden Fläche ein vorteilhafter optischer Eindruck erzielt, was ebenfalls wünschenswert ist.

Die Erfindung wird nachfolgend anhand von Ausführungsbeispielen in der Zeichnung näher erläutert. Es zeigen
- Fig. 1: eine teilweise geschnittene Seitenansicht einer Dosiervorrichtung mit der erfindungsgemäßen Zufuhrvorrichtung
- Fig. 2: die Draufsicht auf die aus Modulelementen zusammengebaute Zufuhrvorrichtung gemäß Fig. 1
- Fig. 3: in vergrößerter Darstellung die Ansicht der Unterseite eines peripheren Elementes der Zufuhrvorrichtung gemäß Fig. 2
- Fig. 4a,b: eine Zufuhrvorrichtung mit einem Modulelement
- Fig. 5, 6 und 8: verschiedene Zufuhrvorrichtungen aus Modulelementen mit einem zentralen Element in Quadratform
- Fig. 7: in schematisierter Darstellung eine Seitenansicht einer Dosiervorrichtung gemäß Stand der Technik
- Fig. 9: Variation der Zufuhreinrichtung gemäß Fig. 2.

In der Fig. 7 ist eine Dosiervorrichtung zum Zuführen eines Aufgabegutes, beispielsweise Rohmaterial in eine kunststoffverarbeitende Maschine, wie Extruder 7, dargestellt.

Die Dosiervorrichtung umfaßt mehrere Trichterwaagen 20a, 20b, 20c, in denen jeweils eine Komponente des Aufgabegutes, abgewogen und in einen Sammeltrichter 5 unmittelbar oder über Dosierschnecken 6b, 6c überführt wird. Von dem Sammeltrichter 5 aus gelangt das abgewogene, aus den Komponenten bestehende Aufgabegut in den Extruder 7. Die Zuführvorrichtung für die Komponenten zu den Trichterwaagen ist oberhalb derselben angeordnet. Für die Zuführung der entsprechenden Komponente in die Trichterwaagen 201, 20b, 20c weist jede Trichterwaage 20a, 20b, 20c einen in die jeweilige Trichterwaage einmündenden Zuführstutzen 32 auf, wobei jeder Zuführstutzen 32 nach erfolgter Befüllung der Trichterwaage 20a, 20b, 20c mittels schematisiert dargestellter Absperrschieber 33 verschließbar ist.

Die Zuführstutzen 32 mit Absperrschieber 33 werden in einer nicht näher dargestellten Tragplatte 10 gehalten, die exakt auf die jeweilige Anordnung der Trichterwaagen 20a, 20b, 20c der Dosiervorrichtung ausgerichtet ist und ein entsprechendes individuell an die jeweils vorgesehene Dosiervorrichtung angepaßtes Bohrbild aufweist, so daß die Zuführstutzen 32 in die Trichterwaagen 20a, 20b, 20c einmünden. Der Aufwand zur Herstellung einer derartigen Tragplatte 10 ist durch diese individuelle Anfertigung beachtlich und eine Anpassung der Tragplatte 10 an Änderungen der Dosiervorrichtung, beispielsweise Hinzufügen oder Entfernen einer Trichterwaage bei Änderung der Komponenten sind - wenn überhaupt - nur mit sehr großem Aufwand möglich.

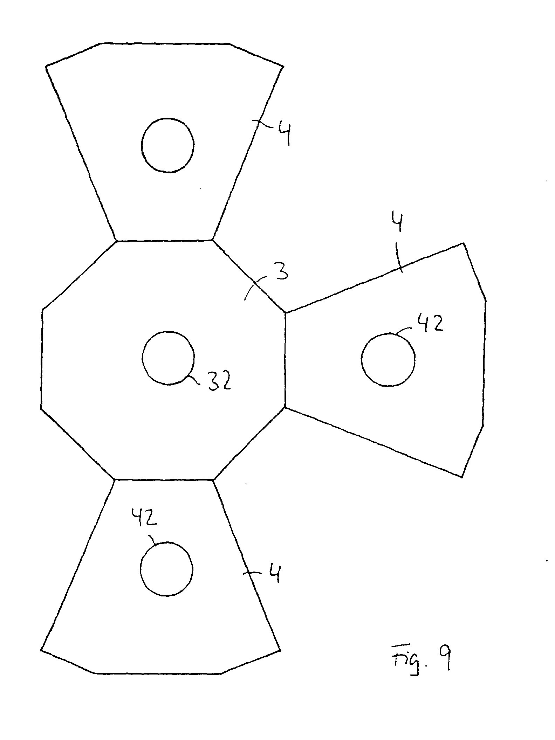

Um diese Nachteile des Standes der Technik zu überwinden, weist die gemäß der Erfindung ausgebildete Vorrichtung zum Zuführen eines rieselfähigen Aufgabegutes in die Dosiervorrichtung den beispielhaft in der Fig. 8 schematisch dargestellten Aufbau auf.

Die Vorrichtung ist modulartig aus mehreren zu der Vorrichtung zusammengesetzten Modulelementen 3,4 aufgebaut, wobei ein Modulelement als zentrales Element 3 und weitere Modulelemente als periphere Elemente 4 ausgebildet sind. Jedes Modulelement weist 3, 4 eine flächige Tragstruktur auf, in der ein Zuführstutzen 32,42 und ein zugehöriger Absperrschieber 33, 43 zum Öffnen bzw. Verschließen des jeweiligen Zuführstutzens 32, 42 mittels einer Schieberplatte 430 gehalten ist, was anhand verschiedener Öffnungsstellungen der Schieberplatte 33,43 in der Fig. 8 dargestellt ist. Je ein Modulelement 3,4 dient dabei der Zuführung einer Komponente in eine hier nicht dargestellte Trichterwaage der Dosiervorrichtung und ist dieser Trichterwaage entsprechend zugeordnet.

Das zentrale Element 3 weist eine viereckige Tragstruktur mit geradlinig verlaufenden Seiten 31 im Bereich seines Außenumfangs auf, an denen jeweils ein peripheres Element 4 angebracht, beispielsweise angeschraubt ist. Die in der Fig. 8 dargestellte Vorrichtung mit zwei an dem zentralen Element 3 befestigten peripheren Elementen 4 ist zum Zuführen von drei Komponenten in jeweils eine Trichterwaage vorgesehen. Durch Hinzufügen oder Entfernen von weiteren peripheren Elementen, beispielsweise die in der Fig. 8 strichliert dargestellten, kann die Vorrichtung einfach auch an Dosiervorrichtungen mit mehr oder weniger Trichterwaagen, hier maximal fünf Trichterwaagen angepaßt werden. Alle peripheren Elemente sind bezüglich ihrer Tragstruktur untereinander gleich ausgebildet. Bevorzugt sind auch die peripheren Elemente komplett ausgerüstet mit Zufuhrstutzen und Schieber untereinander gleich, jedoch ist es auch möglich, Zufuhrstutzen unterschiedlicher Durchlaßquerschnitte auf periphere Elemente mit gleicher Tragstruktur zu montieren.

Vorzugsweise sind die peripheren Elemente 4 in seiner solchen Größe ausgeführt, daß ihre Tragstruktur eine Seitenlänge im Verbindungsbereich zum zentralen Element 3 entsprechend der Seitenlänge der Tragstruktur des zentralen Elementes 3 aufweist.

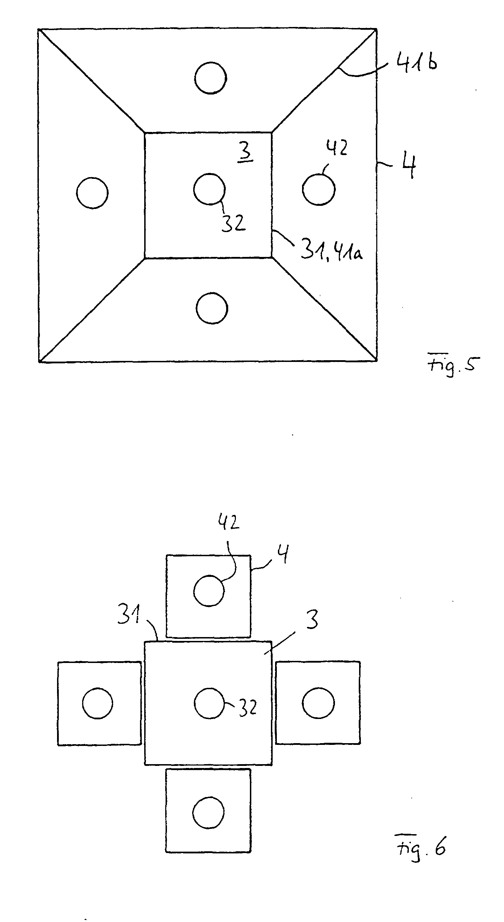

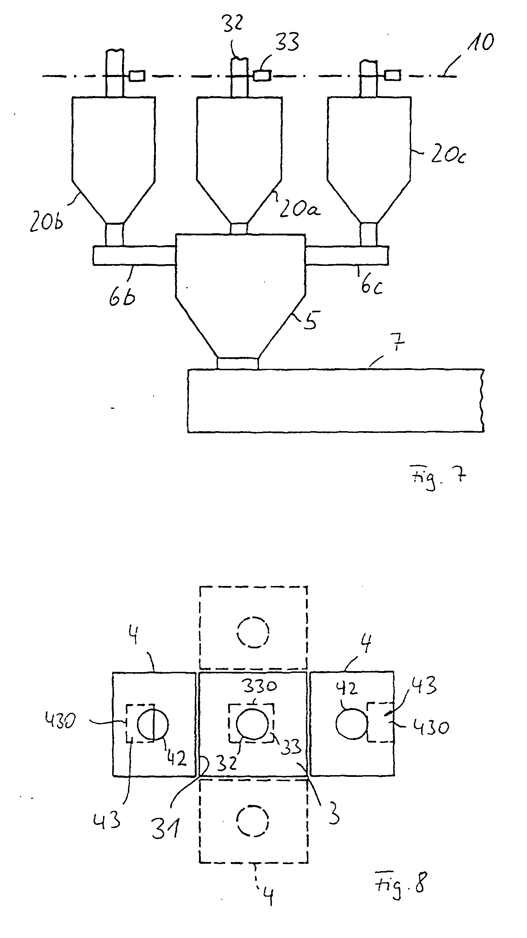

Es ist jedoch auch möglich, wie in der Fig. 6 dargestellt, daß beispielsweise die peripheren Elemente 4 eine geringere Seitenlänge als das zentrale Element 3 aufweisen. Es werden jedoch auch Ausführungsformen bevorzugt, wie in der Fig. 5 dargestellt ist, bei denen die Tragstrukturen der peripheren Elemente 4 mit der Tragstruktur des zentralen Elementes 3 eine durchgehende Fläche ausbilden können, was durch Ausbildung von peripheren Elementen 4 mit einer Tragstruktur in Form eines gleichschenkligen Trapezes zum Beispiel bei Ausbildung des zentralen Elementes mit quadratischer Tragstruktur erzielt werden kann, wodurch die peripheren Elemente 4 bei Befestigung am zentralen Element 3 auf Gehrung angeordnet werden. Das zentrale Element 3 sollte bevorzugt stets eine Form der Tragstruktur aufweisen mit gleich langen Seiten als Dreieck, Quadrat, Fünfeck, Sechseck, Achteck, wobei die jeweils in einer der Anzahl der Seiten des zentralen Elementes zugehörige maximale Anzahl der peripheren Elemente bei untereinander gleicher Form der Tragstruktur entweder eine geschlossene Tragfläche zusammen mit dem zentralen Element bilden oder eine Tragfläche bilden, bei der die peripheren Elemente seitlich voneinander beabstandet sind.

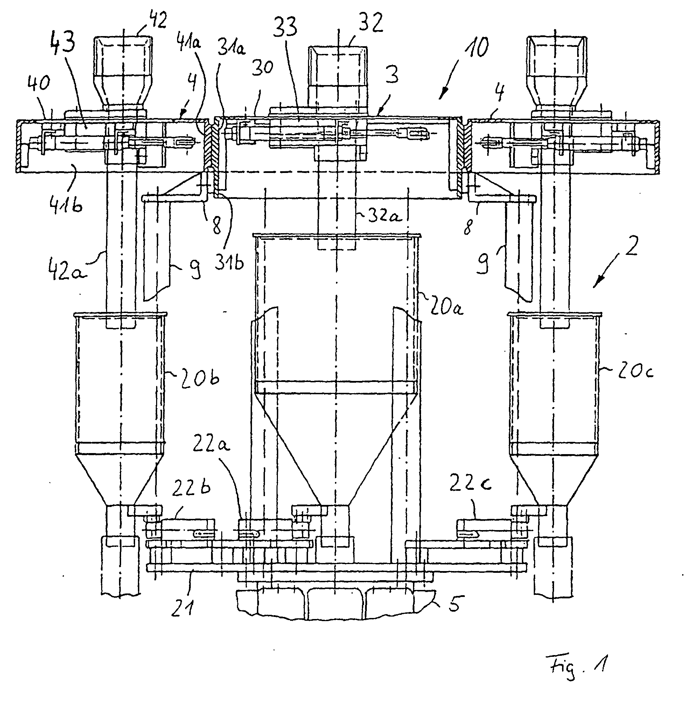

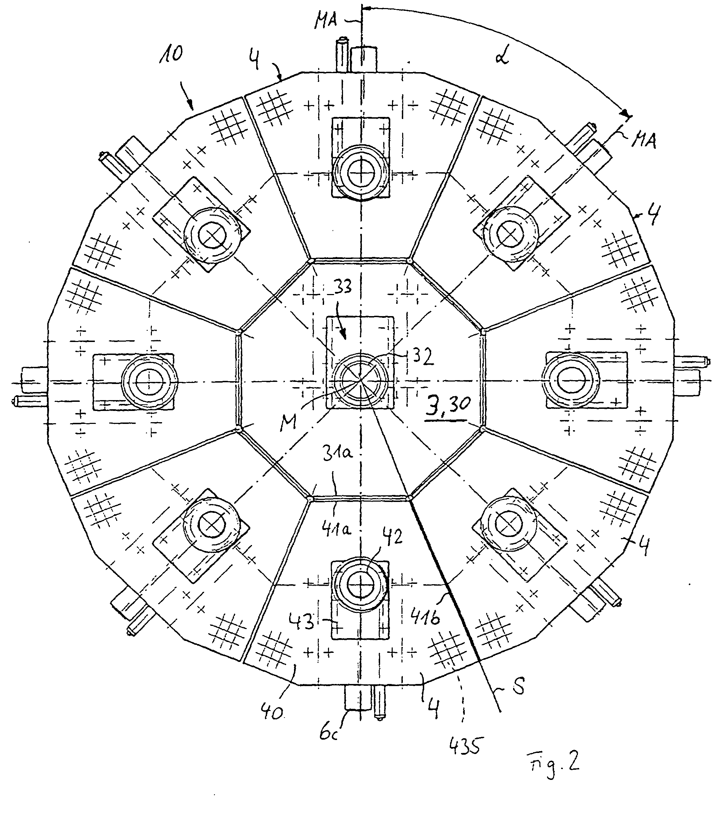

Eine Ausführungsform der Vorrichtung zum Zuführen von maximal neun Komponenten eines rieselfähigen Aufgabegutes in 'eine Dosiervorrichtung ist in näheren Einzelheiten in den Fig. 1 und 2 dargestellt.

Wie insbesondere der Fig. 1 entnehmbar, umfaßt die Dosiervorrichtung 2 eine oberhalb eines Sammeltrichters 5 befestigte Tragplatte 21, auf der Wiegezellen 22a, 22b, 22c befestigt sind. Auf diesen Wiegezellen 22a, 22b, 22c ist in bekannter Weise jeweils eine Trichterwaage 20a, 20b, 20c für jeweils eine Komponente derart befestigt, daß eine Auswiegung der eingefüllten Komponente vorgenommen werden kann.

Zum Zuführen der jeweiligen Komponente in die Trichterwaagen 20a, 20b, 20c ist eine Vorrichtung 10 aus modulartig zusammengesetzten Modulelementen, nämlich einem zentralen Element 3 und an seinem Außenumfang befestigten peripheren Elementen 4 vorgesehen, wobei die Anzahl Modulelemente der Anzahl der in der Dosiervorrichtung vorgesehenen Trichterwaagen für die Komponenten entspricht. Die Modulelemente weisen eine Tragstruktur mit einem plattenförmigen Bodenbereich 30, 40 und den Bodenbereich umlaufend umgebende Seitenwände 31a, 41a,b,c nach Art eines Kastens auf, wobei die Seitenwände auf der der Dosiervorrichtung 2 zugewandten Seite des Bodenbereiches 30, 40 ausgebildet sind.

Wie insbesondere der Darstellung gemäß Fig. 2 entnehmbar, weist die Tragstruktur des zentralen Elementes 3 einen Bodenbereich 30 nach Art eines regelmäßigen Achtecks auf, wobei an jeder zwischen zwei Ecken ausgebildeten geradlinigen Seitenwand 31a ein peripheres Element 4 durch Anlage einer Seitenwand 41a beispielsweise durch Verschrauben befestigbar ist. Im vorliegend dargestellten Ausführungsbeispiel sind acht periphere Elemente 4 am zentralen Element 3 befestigt, so daß insgesamt neun Trichterwaagen der Dosiervorrichtung die jeweilige Komponente zugeführt werden kann.

Die peripheren Elemente weisen eine Tragstruktur mit einem Bodenbereich 40 auf, die im wesentlichen die Form eines gleichschenkligen Trapez aufweist, so daß bei Befestigung von insgesamt acht peripheren Elementen an jeweils einer Seite des zentralen Elementes 3 eine durchgehende Fläche von den Tragstrukturen des zentralen Elementes 3 und der peripheren Elemente 4 gebildet wird.

Zum Zuführen der jeweiligen Komponente in die Trichterwaagen 20a, 20b, 20c weist jedes Modulelement einen Zuführstutzen 32, 42 auf, der etwa senkrecht durch den Bodenbereich 30, 40 von zentralem Element 3 bzw. peripheren Elementen 4 geführt ist und über einen Rohrstutzen 32a, 42a in die jeweilige Trichterwaage 20a, 20b, 20c einmündet.

Im Innern der kastenförmigen Tragstrukturen von zentralem Element 3 und peripheren Elementen 4 sind Absperrschieber 33, 43 als Absperrelement für den jeweiligen Zuführstutzen 32, 42 vorgesehen, die nachfolgend noch näher erläutert werden. Die auf diese Weise aus einem zentralen Element 3 und mehreren an dessen Außenumfang befestigten peripheren Elementen 4 gebildete Vorrichtung zum Zuführen der einzelnen Komponenten des Aufgabegutes in die Trichterwaagen 20a, 20b, 20c wird mittels Stützstreben 9, die sich auf der Tragplatte 21 abstützen, oberhalb der Trichterwaagen 20a, 20b, 20c gehalten. Dazu sind die Seitenwände 31a des zentralen Elementes 3 in einer größeren Höhe als die Seitenwände 41a der peripheren Elemente ausgeführt, so daß im Bereich des Überstandes 31b der Seitenwände 31a des zentralen Elementes 3 Befestigungswinkel 8 befestigbar sind und an diesen die Tragstreben 9 für die Halterung der Vorrichtung befestigbar sind.

Es ist auf diese Weise möglich, durch entsprechende Befestigung von bis zu acht peripheren Elementen 4 am zentralen Element 3 insgesamt neun Trichterwaagen der Dosiervorrichtung 2 mit entsprechenden Zuführstutzen für die jeweilige Komponente zu versehen, so daß die erforderliche Teilezahl für die verschiedenen Dosiervorrichtungen mit unterschiedlicher Anzahl an Trichterwaagen erheblich reduziert wird und auch eine nachträgliche Anpassung an eine größer oder geringer werdende Anzahl von Trichterwaagen durch entsprechende Befestigung oder Entfernung von peripheren Elementen 4 einfach zu bewerkstelligen ist.

Die Befestigung der peripheren Elemente 4 an dem zentralen Element erfolgt beispielsweise durch hier nicht näher dargestelltes Verschrauben der aneinander zur Anlage kommenden Seitenwände 31a, 41a der Tragstrukturen von zentralem Element 3 und peripheren Elementen 4. Eine Befestigung der einzelnen peripheren Elemente 4 untereinander ist im dargestellten Ausführungsbeispiel nicht vorgesehen, kann jedoch selbstverständlich ebenfalls erfolgen.

Im vorliegenden Ausführungsbeispiel gemäß Fig. 2 sind alle peripheren Elemente 4 gleich ausgebildet, wobei der Zuführstutzen 42 zentral im Bodenbereich 40 der Tragstruktur angeordnet ist. Auch der Zuführstutzen 32 des zentralen Elements 3 ist zentral im Bodenbereich der Tragstruktur 30 angeordnet. Durch die vorangehend bereits beschriebene achteckige Form der Tragstruktur des zentralen Elements 3 und der im wesentlichen trapezartigen Form der Tragstruktur der peripheren Elemente 4 wird erreicht, daß die peripheren Elemente 4 so zum zentralen Element 3 angeordnet befestigbar sind, daß die jeweils durch den Mittelpunkt der Zuführstutzen 42 und den Mittelpunkt des Zuführstutzens 32 im zentralen Element 3 verlaufenden Achsen MA zweier benachbarter peripherer Elemente 4 unter einem Winkel α von 450 angeordnet sind. Darüber hinaus verlaufen die entlang der Schenkel der trapezartig ausgebildeten Tragstruktur der peripheren Elemente 4 ausgebildeten Seitenwände 41b der peripheren Elemente entlang ihrer Verlängerung S durch den Mittelpunkt M des zentralen Elementes 3, so daß die Bodenbereiche 30, 40 von zentralem Element 3 und peripheren Elementen 4 eine ebene, nur von den Fügekanten leicht unterbrochene Fläche bilden, was optisch vorteilhaft ist und Beschädigungen vorbeugt.

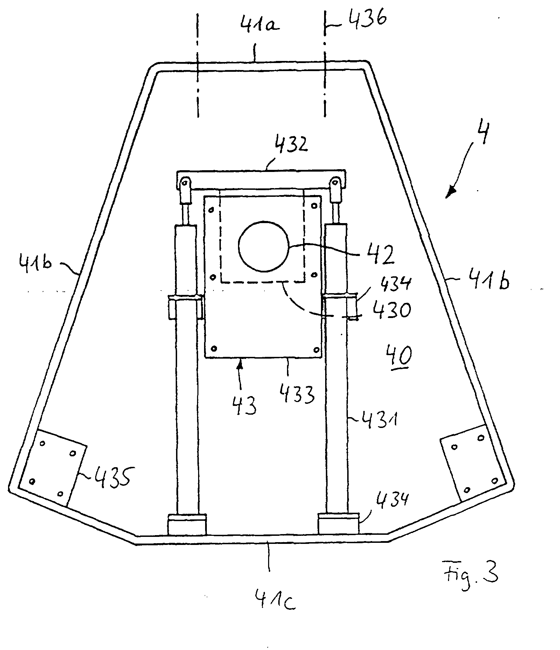

Der Aufbau eines Modulelementes ist anhand eines peripheren Elementes 4 in der Fig. 3 näher dargestellt. Wie bereits erläutert, weist dieses periphere Element 4 eine Tragstruktur mit einem Bodenbereich 40 und den Bodenbereich umgebenden Seitenwänden 41a, 41b, 41c auf, wobei das periphere Element 4 mit seiner Seitenwand 41 a an einer Seite 31a des zentralen Elementes 3 befestigbar ist, wozu beispielsweise Bohrungen 436 in der Seitenwand 41a zur Verschraubung mit der Seitenwand 31a des zentralen Elementes 3 vorgesehen sind.

Der Zuführstutzen 42 für die zuzuführende Komponente ist senkrecht durch den Bodenbereich 40 der Tragstruktur hindurchgeführt und ein Absperrschieber 43 ist im Innern der kastenförmigen Tragstruktur aus Bodenbereich 40 und Seitenwänden 41a, 41 b des peripheren Elementes 4 angeordnet. Der Absperrschieber 43 weist eine den Querschnitt des Zuführstutzens 42 freigebende oder verschließende Schiebeplatte 430 auf, die in einem Gehäuse 433, welches am Bodenbereich 40 angeschraubt ist, längsverschieblich geführt ist.

Zur Bewegung der Schiebeplatte 430 ist an ihrem einen Ende ein Jochbalken 432 befestigt, der mittels zweier Pneumatikzylinder 431, die über Befestigungswinkel 434 am Bodenbereich 40 des peripheren Elementes 4 befestigt sind, betätigt wird, so daß ein Öffnen und Verschließen des Zuführstutzens 42 bewirkt werden kann. Durch diesen vorangehend beschriebenen Aufbau wird somit ein Modulelement, hier peripheres Element 4, geschaffen, welches mit sämtlichen für die Zuführung der Komponente in eine Trichtenvaage benötigten Teilen ausgerüstet ist, so daß durch derartige Modulelemente die Zuführung von Komponenten in eine Dosiervorrichtung auf einfache Weise bewerkstelligt werden kann.

Die kastenartige Tragstruktur der Modulelemente 3, 4 kann im Betriebszustand mittels hier nicht dargestellter Abdeckungen, wie Gitter oder dergleichen verschlossen sein, so daß Beschädigungen und Verletzungsgefahren vermieden werden.

Die vorangehend beschriebenen Modulelemente eignen sich somit für die Herstellung einer Vorrichtung zum Zuführen mehrerer Komponenten in eine entsprechende Anzahl Trichterwaagen umfassende Dosiervorrichtung, in dem sie zu einer Vorrichtung 10 in entsprechender Anzahl zusammengefügt werden.

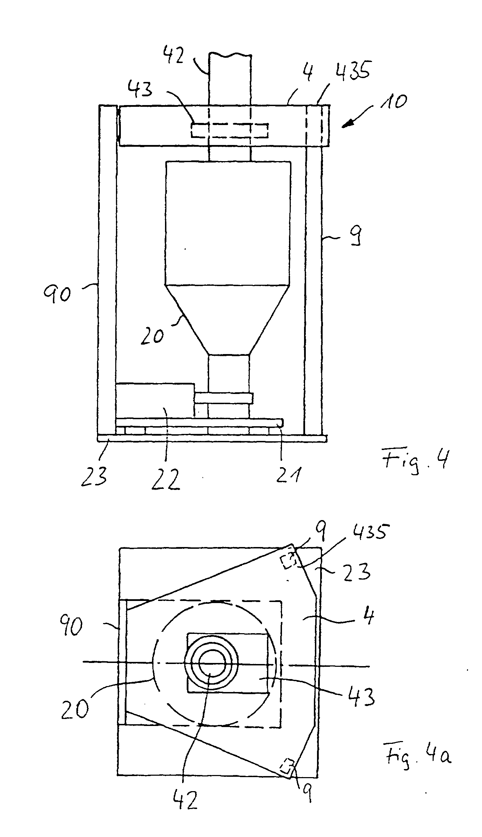

Es ist darüber hinaus aber auch möglich, ein Modulelement, beispielsweise ein peripheres Element 4, alleine zu verwenden, um eine Zuführung eines Aufgabegutes in eine lediglich eine Trichterwaage 20 aufweisende Dosiervorrichtung zu gewährleisten, was in Fig. 4 dargestellt ist.

Wie dieser Fig. 4 entnehmbar, weist diese Dosiervorrichtung 2 lediglich eine Trichterwaage 20 auf, die mit ihrer Wiegezelle 22 auf einer Trageplatte 21 befestigt ist. Oberhalb der Trichterwaage 20 ist ein vorangehend beschriebenes peripheres Element 4 mit seiner Seitenwand 41a an einem Stützträger 90 befestigt, so daß über den in die Tragstruktur des peripheren Elementes 4 eingesetzten Zuführstutzen 42 und Absperrschieber 43 eine Befüllung der Trichterwaage 20 erfolgen kann. Um dabei das periphere Element 4 auch im Bereich seiner der Seitenwand 41a gegenüberliegenden Seitenwand abzustützen und das Eigengewicht aufzufangen, weist das periphere Element 4, wie aus Fig. 3 ersichtlich, in den der Seitenwand 41a abgewandten Eckbereichen der Seitenwand 41c jeweils verstärkte Bereiche 435 auf, an denen Stützstreben 9 befestigt, beispielsweise verschraubt werden können.

Die erfindungsgemäße Vorrichtung ermöglicht daher durch ihren modulartigen Aufbau sowohl die Herstellung einer Vorrichtung für eine mehrere Trichterwaagen aufweisende Dosiervorrichtung, wie es auch möglich ist, eine Dosiervorrichtung mit lediglich einer Trichterwaage unter Verwendung nur eines Modulelementes der erfindungsgemäßen Vorrichtung zu schaffen. Die erforderliche Teilezahl zur Herstellung der erfindungsgemäßen Vorrichtung wird damit auf ein Minimum begrenzt, sie beschränkt sich auf ein zentrales Modulelement 3 und eine genügende Anzahl peripherer Elemente 3.

Sofern eine an beispielsweise einer Extrusions- oder Spritzgießmaschine angebrachte Dosiervorrichtung auf eine andere Produktspezifikation umgestellt werden soll und hierdurch bedingt mehr oder weniger Komponenten für das Aufgabegut benötigt werden, kann durch Hinzufügen oder Entfernen von peripheren Elementen zu dem zentralen Element eine flexible Anpassung an die jeweils vorherrschende Anzahl Trichterwaagen vorgenommen werden, was nur eine kurze Zeitdauer in Anspruch nimmt.

Ebenso ist es möglich, bei geänderten Gewichtsanteilen der Komponenten die Vorrichtung auch an eventuell erforderliche Änderungen der Größe der jeweiligen Trichterwaagen auch durch Austausch der zugehörigen Modulelemente anzupassen und Modulelemente mit größeren oder kleineren Zuführstutzen vorzusehen.

Hierfür ist es insbesondere bevorzugt, das zentrale Element 3 mit allen Zufuhrleitungen für die Energieversorgung zum Betätigen der Betätigungsorgane der Absperrschieber auszurüsten und an den peripheren Elementen die Anschlüsse hier zum Beispiel Pneumatikleitungen und Steuerventile, bereits fabrikmäßig vorzusehen, so daß beim Anschluß jedes peripheren Elementes an das zentrale Element lediglich eine Verbindung der Betätigungsorgane des peripheren Elementes zu der Zufuhrleitung im zentralen Element vorgenommen werden muß, um den Antrieb des jeweiligen Absperrschiebers zu bewirken.

Hierdurch werden die Montage- und Umrüstzeiten der erfindungsgemäßen Vorrichtung nochmals verringert, was Kosteneinsparungen bei erhöhter Flexibilität mit sich bringt.

## Patentansprüche

1. Zufuhrvorrichtung für eine oder mehrere Komponenten eines rieselfähigen Aufgabegutes zu einer Dosiervorrichtung, wobei die Dosiervorrichtung eine der Anzahl der Komponenten entsprechende Anzahl von Trichterwaagen (20a, 20b, 20c) für jede der Komponenten aufweist, die oberhalb der Dosiervorrichtung angeordnet ist und jeder Trichterwaage (20a, 20b, 20c) zugeordnet je einen mit einem Absperrelement (33, 43) zum Öffnen und Verschließen ausgerüsteten Zuführstutzen (32, 42) für die Komponente umfaßt, **dadurch gekennzeichnet, daß** modulartig zusammensetzbare eine Tragstruktur und einen Zuführstutzen (32, 42) und ein Absperrelement (33, 43) umfassende Modulelemente (3, 4) vorgesehen sind, wobei jedes Modulelement eine eigene Tragstruktur aufweist.

2. Vorrichtung nach Anspruch 1,
**dadurch gekennzeichnet, daß** als Modulelemente ein zentrales Element und periphere Elemente vorgesehen sind, wobei die peripheren Elemente am Außenumfang des zentralen Elementes anbaubar sind.

3. Vorrichtung nach einem der Ansprüche 1 oder 2, **dadurch gekennzeichnet, daß** die Tragstruktur der Modulelemente im wesentlichen flächig ausgebildet ist und der Zuführstutzen senkrecht durch die Fläche geführt ist.

4. Vorrichtung nach einem der Ansprüche 1 bis 3,
**dadurch gekennzeichnet, daß** die Tragstruktur des zentralen Elementes mehreckig, mindestens dreieckig, mit geradlinig verlaufenden Seiten ausgebildet ist, wobei an jeder Seite ein peripheres Element befestigbar ist.

5. Vorrichtung nach einem der Ansprüche 1 bis 4,
**dadurch gekennzeichnet, daß** die Modulelemente mit gleich oder unterschiedlich großen Zuführstutzen ausrüstbar sind.

6. Vorrichtung nach einem der Ansprüche 1 bis 5,
**dadurch gekennzeichnet, daß** alle peripheren Elemente mit einer Tragstruktur gleicher Gestalt ausgebildet sind.

7. Vorrichtung nach einem der Ansprüche 1 bis 6,
**dadurch gekennzeichnet, daß** die Tragstruktur der Modulelemente einen plattenförmigen Bodenbereich mit den Bodenbereich umlaufend umgebenden Seitenwänden nach Art eines Kastens aufweist, wobei die Befestigungen der Modulelemente untereinander im Bereich der Seitenwände vorgesehen sind.

8. Vorrichtung nach einem der Ansprüche 1 bis 7,
**dadurch gekennzeichnet, daß** jedes periphere Element an dem zentralen Element befestigt ist.

9. Vorrichtung nach einem der Ansprüche 7 oder 8,
**dadurch gekennzeichnet, daß** innerhalb der kastenförmigen Tragstruktur der Modulelemente Betätigungsorgane, wie Pneumatikzylinder für das Absperrelement angeordnet sind.

10. Vorrichtung nach einem der Ansprüche 1 bis 9,
**dadurch gekennzeichnet, daß** das zentrale Element mit sämtlichen Zuführleitungen für Energie zum Betätigen der Betätigungsorgane der Absperrelemente ausgerüstet ist und die Betätigungsorgane der peripheren Elemente Anschlüsse für die Zuführleitungen des zentralen Elementes aufweisen.

11. Vorrichtung nach einem der Ansprüche 1 bis 10,
**dadurch gekennzeichnet, daß** als Absperrelement ein Absperrschieber mit einer den Zuführstutzen öffnenden oder verschließenden bewegbaren Schiebeplatte vorgesehen ist.

12. Vorrichtung nach einem der Ansprüche 7 bis 11,
**dadurch gekennzeichnet, daß** auf der der Dosiervorrichtung zugewandten Seite des Bodens der Tragstruktur der Modulelemente verstärkte Bereiche für die Befestigung von Stützstreben ausgebildet sind.

13. Vorrichtung nach einem der Ansprüche 7 bis 12, **dadurch gekennzeichnet, daß** die Seitenwände des zentralen Elementes höher als die der peripheren Elemente ausgebildet sind und im Bereich des Überstandes der Seitenwände des zentralen Elementes Befestigungswinkel für die Befestigung von Stützstreben anbringbar sind.

14. Vorrichtung nach einem der Ansprüche 1 bis 13, **dadurch gekennzeichnet, daß** die Tragstruktur des zentralen Elementes als regelmäßiges Achteck ausgebildet ist und die Tragstruktur der peripheren Elemente im wesentlichen als gleichschenkliges Trapez ausgebildet ist, so daß die Tragstrukturen der peripheren Elemente mit der Tragstruktur des zentralen Elementes zu einer durchgehenden Fläche zusammenbaubar sind.

## Claims

1. Feeding apparatus for supplying one or more constituents of a free-flowing bulk material to a dosing apparatus, wherein, for each of the constituents, the dosing apparatus includes a number of hopper scales (20a, 20b, 20c), which corresponds to the number of constituents, said feeding apparatus is disposed above the dosing apparatus and includes supply connector pieces (32, 42) for the constituents, each being provided with a shut-off member (33, 43) for opening and closing and each being associated with a hopper scale (20a, 20b, 20c), **characterised in that** modular elements (3, 4) are provided, which can be assembled in a modular manner and include a carrier structure and a supply connector piece (32, 42) and a shutoff!member (33, 43), wherein each modular element includes its own carrier structure.

2. Apparatus according to claim 1, **characterised in that** a central element and peripheral elements are provided as modular elements, the peripheral elements being attachable to the outer periphery of the central element.

3. Apparatus according to one of claims 1 or 2, **characterised in that** the carrier structure of the modular elements is substantially flat and the supply connector piece is guided at right angles through the surface.

4. Apparatus according to one of claims 1 to 3, **characterised in that** the carrier structure of the central element is polygonal, at least triangular, having sides which extend in a rectilinear manner, one peripheral element being securable to each side.

5. Apparatus according to one of claims 1 to 4, **characterised in that** the modular elements can be provided with supply connector pieces of an identical or variable size.

6. Apparatus according to one of claims 1 to 5, **characterised in that** all peripheral elements are configured with an identically shaped carrier structure.

7. Apparatus according to one of claims 1 to 6, **characterised in that** the carrier structure of the modular elements includes a plate-shaped floor region with lateral walls surrounding the floor region in a circumferential manner in the manner of a box, the fastenings of the modular elements one to the other being provided in the region of the lateral walls.

8. Apparatus according to one of claims 1 to 7, **characterised in that** each peripheral element is secured to the central element.

9. Apparatus according to one of claims 7 or 8, **characterised in that** actuating members, such as pneumatic cylinders for the shutoff member, are disposed internally of the box-shaped carrier structure of the modular elements

10. Apparatus according to one of claims 1 to 9, **characterised in that** the central element is provided with all supply lines for power for the actuation of the actuating members of the shutoff member and the actuating members of the peripheral elements iniclude connections for the supply lines of the central element.

11. Apparatus according to one of claims 1 to 10, **characterised in that** a shutoff slide with a slide plate, which is displaceable for opening and closing the supply connector piece, is provided as the shutoff member.

12. Apparatus according to one of claims 7 to 11, **characterised in that** reinforced regions for the fastening of support struts are provided on the side facing the dosing apparatus of the floor of the carrier structure of the modular elements.

13. Apparatus according to one of claims 7 to 12, **characterised in that** the lateral walls of the central element are higher than those of the peripheral elements and fastening angles for the fastening of support struts are mountable in the region of the projection of the lateral walls of the central element.

14. Apparatus according to one of claims 1 to 13, **characterised in that** the carrier structure of the central element is in the form of a regular octagon and the carrier structure of the peripheral elements is substantially in the form of an equal-sided trapezoid, such that the carrier structures of the peripheral elements can be assembled with the carrier structure of the central element to form a continuous surface.

## Revendications

1. Dispositif d'amenée à un dispositif de dosage de un ou plusieurs composants d'un produit d'alimentation coulant, ce dispositif de dosage présentant des trémies de pesage (20a,20b, 20c), pour chacun des composants, en nombre correspondant au nombre de ceux-ci, placées au-dessus du dispositif de dosage, une tubulure d'amenée (32, 42) du composant, équipée pour son ouverture et sa fermeture d'un élément d'arrêt (33, 43), étant associée à chaque trémie de pesage,
**caractérisé en ce qu'**
il est prévu des éléments modulaires (3 et 4) assemblables, qui présentent une structure porteuse, une tubulure d'amenée (32, 42) et un élément d'arrêt (33, 43), chaque élément modulaire possédant une structure porteuse propre.

2. Dispositif d'amenée selon la revendication 1,
**caractérisé en ce qu'**
il est prévu, comme éléments modulaires, un élément central et des éléments périphériques qui peuvent être montés à la périphérie de l'élément central.

3. Dispositif d'amenée selon la revendication 1 ou 2,
**caractérisé en ce que**
la structure porteuse des éléments modulaires présente une surface essentiellement plane que la tubulure d'amenée traverse perpendiculairement.

4. Dispositif d'amenée selon une des revendications 1 à 3,
**caractérisé en ce que**
la structure porteuse de l'élément central est au moins triangulaire avec des côtés droits le long de chacun desquels peut être fixé un élément périphérique.

5. Dispositif d'amenée selon une des revendications 1 à 4,
**caractérisé en ce que**
les éléments modulaires peuvent être équipés de tubulure d'amenée de même grandeur ou de grandeurs différentes.

6. Dispositif d'amenée selon une des revendications 1 à 5,
**caractérisé en ce que**
tous les éléments périphériques ont une structure porteuse de même configuration.

7. Dispositif d'amenée selon une des revendications 1 à 6,
**caractérisé en ce que**
la structure porteuse des éléments modulaires présente une zone de fond en forme de plaque et des parois latérales entourant périphériquement cette zone à la manière d'un caisson, les fixations des éléments modulaires entre eux étant prévues dans la zone des parois latérales.

8. Dispositif d'amenée selon une des revendications 1 à 7,
**caractérisé en ce que**
chaque élément périphérique est fixé à l'élément central.

9. Dispositif d'amenée selon la revendication 7 ou 8,
**caractérisé en ce qu'**
à l'intérieur de la structure porteuse des éléments modulaires formant caisson, sont montés les organes d'actionnement tels que des vérins pneumatiques pour l'élément d'arrêt.

10. Dispositif d'amenée selon une des revendications 1 à 9,
**caractérisé en ce que**
l'élément central est équipé de l'ensemble des conduites d'amenée de l'énergie servant à actionner les organes de manoeuvre des éléments d'arrêt, les éléments de manoeuvre des éléments périphériques comportant des raccords pour des conduites d'amenée de l'élément central.

11. Dispositif d'amenée selon une des revendications 1 à 10,
**caractérisé en ce que**
comme élément d'arrêt il est prévu un tiroir avec une plaque coulissante pouvant se déplacer pour ouvrir ou fermer la tubulure d'amenée.

12. Dispositif d'amenée selon une des revendications 7 à 11,
**caractérisé en ce que**
sur le côté de la structure porteuse des éléments modulaires situé en face du dispositif de dosage, se trouvent des zones renforcées pour la fixation de barres de soutien.

13. Dispositif d'amenée selon une des revendications 7 à 12,
**caractérisé en ce que**
les parois latérales de l'élément central sont plus hautes que celles des éléments périphériques et, dans la zone où les parois latérales de l'élément central dépassent, peuvent être installées des cornières de fixation pour fixer des barres de soutien.

14. Dispositif d'amenée selon une des revendications 1 à 13,
**caractérisé en ce que**
la structure porteuse de l'élément central a la forme d'un octogone régulier, tandis que la structure porteuse des éléments périphériques a essentiellement la forme d'un trapèze isocèle, de sorte que les structures porteuses des éléments périphériques peuvent être assemblés à la structure porteuse de l'élément central pour donner une surface continue.
